# FASCICULE DE BREVET EUROPEEN

(11) **EP 1 811 270 B1**
(45) Date de publication et mention de la délivrance du brevet: **13.07.2011**
(21) Numéro de dépôt: 07290028.5
(22) Date de dépôt: 09.01.2007
(51) Int. Cl.: G01D 5/244, G01D 3/08

(54) **Procédé de codage et dispositif de détermination de position angulaire absolue**
Kodierungsverfahren und Vorrichtung zur Bestimmung der absoluten Winkelposition
Encoding method and device for determining an absolute angular position

(30) Priorité: 19.01.2006 FR 0600521
(43) Date de publication de la demande: 25.07.2007
(73) Titulaire: S.N.R. ROULEMENTS, 74000 Annecy (FR)
(72) Inventeur: Desbiolles, Pascal, 74570 Thorens Glieres (FR)
(74) Mandataire: Sayettat, Julien Christian

(56) Documents cités:
- EP-A- 0 431 195
- FR-A- 2 845 212
- GB-A- 2 016 247
- US-A- 4 600 835

## Description

L'invention concerne un procédé de codage d'au moins une information ainsi qu'un dispositif de détermination de la position angulaire absolue d'un organe tournant.

On connaît des dispositifs de détermination de la position angulaire absolue d'un organe tournant qui comprenne :
- un codeur destiné à être solidarisé à l'organe tournant, ledit codeur étant agencé pour délivrer deux signaux pseudos sinusoïdaux ;
- un capteur destiné à être fixé à distance de lecture du codeur, ledit capteur comprenant des éléments sensibles qui sont aptes à détecter les signaux délivrés par le codeur ;
- un dispositif de traitement des signaux issus du capteur, ledit dispositif étant agencé pour délivrer trois signaux digitaux A, B, C, les signaux A et B étant représentatif de la position angulaire du codeur et le signal C comprenant au moins une impulsion de référence ;
- une unité centrale connectée au dispositif de traitement, ladite unité étant agencée pour exploiter les signaux A, B, C sur respectivement une voie.

En effet, par utilisation de la ou des impulsions de référence, on peut indexer la position angulaire issus des signaux A et B à une position de référence connue de sorte à obtenir une position angulaire absolue par rapport à ladite référence.

On peut par exemple se référer aux documents FR-2 845 212 et FR-2 845 213 qui décrivent l'utilisation d'un tel système de détermination pour le pilotage d'un moteur à commutation électronique, notamment pour l'assistance de la direction des véhicules automobiles par un système de direction assistée de type électrique.

On connaît par ailleurs des dispositifs de détermination d'une position angulaire capable de fournir d'autres informations que ladite position, ces dispositifs étant généralement utilisés pour mesurer la vitesse de rotation d'une roue de véhicule automobile dans des applications de type ABS (pour Anti-Blocking System).

On peut par exemple se référer au document EP-1 393 082 dans lequel des informations sont transmises en utilisant des trains d'impulsions disposés entre les impulsions de référence.

Toutefois, ce type de dispositifs n'est envisageable que dans des applications à basse vitesses de rotation de l'organe tournant, faute de quoi la distance temporelle entre deux impulsions de références n'est pas suffisante pour contenir le train de pulse.

Par conséquent, dans des applications à plus grande vitesse, telles que celles décrites dans le document FR-2 845 213 où la vitesse de rotation du moteur peut être de plusieurs milliers de tours par minute, et a fortiori lorsque la résolution nécessaire est importante, il existe encore un besoin pour un dispositif de détermination permettant le codage d'une information de façon fiable.

Pour résoudre ce problème, on pourrait envisager d'utiliser une quatrième voie, en plus des trois voies par lesquelles respectivement les signaux A, B et C sont délivrés, par l'intermédiaire de laquelle l'information supplémentaire serait transmise. Toutefois, cet ajout n'est pas satisfaisant d'un point de vue économique du fait de l'utilisation d'un fil, d'un connecteur et d'une interface supplémentaires.

L'invention a pour but de pallier ces inconvénients en proposant notamment un dispositif de détermination de position absolue qui utilise un procédé de codage d'information à grande vitesse et ce, sans modifier le nombre de voies de transmission des signaux.

A cet effet, et selon un premier aspect, l'invention propose un procédé de codage d'au moins une information au moyen de trois signaux digitaux A, B, C délivrés sur respectivement une voie, dans lequel le troisième signal C est délivré par combinaison des deux premiers signaux A, B de sorte à former m triplets binaires, avec m < 8, ledit procédé prévoyant de modifier le troisième signal C en fonction de l'information à coder de sorte à générer n triplets binaires, avec n > 1, lesdits n triplets étant différents des m triplets.

Selon un deuxième aspect, l'invention propose un dispositif de détermination de la position angulaire absolue d'un organe tournant, ledit dispositif comprenant :
- un codeur destiné à être solidarisé à l'organe tournant, ledit codeur étant agencé pour délivrer deux signaux pseudos sinusoïdaux ;
- un capteur destiné à être fixé à distance de lecture du codeur, ledit capteur comprenant des éléments sensibles qui sont aptes à détecter les signaux délivrés par le codeur ;
- un dispositif de traitement des signaux issus du capteur, ledit dispositif étant agencé pour délivrer trois signaux digitaux A, B, C, les signaux A et B étant représentatifs de la position angulaire du codeur et le signal C étant obtenu par combinaison des signaux A, B de sorte à comprendre au moins une impulsion de référence, les états respectifs des trois signaux A, B, C formant m triplets binaires, avec m < 8 ;
- une unité centrale connectée au dispositif de traitement, ladite unité étant agencée pour exploiter les signaux A, B, C sur respectivement une voie ;
dans lequel le dispositif de traitement comprend en outre des moyens de codage pour, en fonction de la réception d'une information à coder, modifier le signal C de sorte à générer un triplet binaire différent des m triplets, et en ce que l'unité centrale comprend des moyens de détection dudit triplet.

D'autres particularités et avantages de l'invention apparaîtront dans la description qui suit faite en référence à la figure jointe qui représente trois signaux digitaux A, B, C selon un mode de réalisation, les signaux A et B étant représentatif de la position angulaire et le signal C étant obtenu par combinaison des signaux A, B de sorte à comprendre une impulsion de référence.

L'invention concerne un dispositif de détermination de la position angulaire absolue d'un organe tournant. Par position angulaire absolue, on entend une position angulaire qui est calculée par rapport à une référence.

Dans un exemple d'application, ce type de dispositif de détermination peut être utilisé pour le pilotage d'un moteur à commutation électronique comme décrit dans le document FR-2 845 213, dans laquelle la résolution angulaire doit être de l'ordre de 1° voire 0,1° avec une vitesse de rotation typique de plusieurs milliers de tours.

Toutefois, l'invention n'est nullement limitée à cette application particulière, et peut être utilisée pour toutes applications nécessitant d'indexer la position angulaire d'un organe tournant par rapport à une position de référence.

Le dispositif de détermination comprend un codeur destiné à être solidarisé à l'organe tournant, ledit codeur étant agencé pour délivrer deux signaux pseudos sinusoïdaux. Selon un mode de réalisation, le codeur est formé d'un anneau magnétique comprenant une piste multipolaire principale et une piste multipolaire de référence qui sont concentrique, lesdites pistes comprenant une succession de pôles Nord et Sud de largeur polaire constante.

En outre, la piste de référence comprend une transition magnétique qui est différente des autres, de sorte par exemple à intégrer une singularité magnétique formée par une paire de pôle de largeur différente des autres. Une telle réalisation de codeur est par exemple décrite dans les documents FR-2 769 088 et EP-0 871 014. Selon une réalisation, la piste de référence peut comprendre plusieurs singularités magnétiques qui sont réparties le long de ladite piste de sorte à former des séquences binaires particulières correspondant à une référence déterminée.

Le dispositif de détermination comprend en outre un capteur destiné à être fixé à distance de lecture du codeur. Le capteur comprend des éléments sensibles, par exemple des sondes à effet Hall, des magnétorésistances ou des magnétorésistances géantes, qui sont aptes à détecter les signaux délivrés par le codeur.

En particulier, le capteur peut comprendre au moins deux éléments sensibles disposés à distances d'entrefer de la piste principale et au moins un élément sensible disposé à distance d'entrefer de la piste de référence. En variante, le capteur peut comprendre une pluralité d'éléments sensibles alignés telle que décrit dans le document FR-2 792 403.

Le dispositif de détermination comprend également un dispositif de traitement des signaux issus du capteur, ledit dispositif étant agencé pour délivrer trois signaux digitaux A, B, C.

Un exemple de réalisation de ces signaux est représenté sur la figure, dans laquelle les signaux A, B sont en quadrature, et sont combinés par l'opérateur logique ET de sorte à délivrer un signal C lors de la détection de la singularité magnétique de la piste de référence.

Ainsi, les signaux A et B sont représentatif de la position angulaire du codeur et le signal C comprend au moins une impulsion de référence. Selon la réalisation décrite, la détermination de la position au moyen des signaux A, B permet de connaître la vitesse de rotation ainsi que le sens de rotation de l'organe tournant par mesure incrémentale. En outre, le signal C permet de recaler le signal incrémental à un état de référence par rapport auquel l'impulsion de référence est indexée, de sorte à obtenir un signal de position absolue.

En variante, pour augmenter la résolution des signaux, le dispositif de traitement peut comprendre un interpolateur, par exemple du type décrit dans le document FR-2 754 063.

Sur la base de ces trois signaux, huit triplets binaires peuvent être théoriquement formé en fonction des états respectifs desdits signaux, à savoir 100, 110, 111, 000, 011, 001, 010 et 101.

Toutefois, comme il apparaît sur la figure, du fait des états respectifs des trois signaux A, B, C, seul un nombre m = 5 de triplets binaires sont effectivement formé, à savoir les triplets 000, 010, 100, 110 et 111.

Ces triplets binaire sont ensuite délivrée à une unité centrale qui est connectée au dispositif de traitement, ladite unité étant agencée pour exploiter les signaux A, B, C sur respectivement une voie de sorte à avoir une action déterminée en fonction du triplet reçu.

Le dispositif de traitement comprend en outre des moyens de codage pour, en fonction de la réception d'une information à coder, modifier le signal C. Ainsi, il est possible de générer un triplet binaire différent des m triplets mentionnés ci-dessus.

Par conséquent, en prévoyant que l'unité centrale comprenne des moyens de détection dudit triplet, il est possible d'envoyer une information codée à l'unité centrale de sorte qu'elle puisse mettre en oeuvre une action déterminée en fonction de cette information.

En variante, les moyens de codage peuvent être agencés pour coder n informations différentes, par n modifications différentes du signal C de sorte à générer n triplets binaires qui sont différents entre eux.

Dans un exemple de réalisation, l'information à coder correspond à un état de fonctionnement du dispositif de détermination, notamment à un état de fonctionnement anormal. Par exemple, il peut s'agir d'un fonctionnement avec un entrefer trop grand ou trop petit, d'un défaut de fonctionnement de l'interpolateur ou d'autres anomalies dans la chaîne d'acquisition des signaux.

Outre des informations internes au dispositif de détermination, les informations à coder peuvent être relatives à une condition de fonctionnement de l'organe tournant, comme par exemple le couple appliqué dans le cas d'un rotor de moteur à commutation électronique ou l'état d'usure des plaquettes de frein dans le cas d'une roue de véhicule automobile.

Le dispositif de traitement est connecté à un dispositif de détection de l'état de fonctionnement, les moyens de codage étant activé par la détection dudit état de sorte à informer l'unité centrale du fonctionnement dans l'état correspondant. En particulier, l'unité centrale peut être programmée pour s'adapter à l'état de fonctionnement, ou pour délivrer un signal de défaut.

Selon la réalisation décrite ci-dessus, il est possible de communiquer une information relative à un état de fonctionnement quelque soit la vitesse de rotation de l'organe tournant, y compris à vitesse de rotation nulle, ce qui est rendu nécessaire notamment dans le cadre d'applications sécuritaires pour un véhicule automobile.

On décrit ci-dessous plus en détail le procédé de codage objet de l'invention en relation avec un mode de réalisation dans lequel le troisième signal C est obtenu par combinaison des deux premiers signaux A, B par l'opérateur ET de sorte à former m triplets binaires, avec m < 8.

Toutefois, l'invention peut être utilisée dans d'autres modes de réalisation de la combinaison de deux signaux binaire pour obtenir un troisième signal binaire de sorte à délivrer un nombre de triplets binaires strictement inférieur au nombre théorique possible.

Le procédé de codage prévoit de modifier le troisième signal C en fonction de l'information à coder de sorte à générer un état particulier sur ledit signal. Cet état particulier est agencé pour, en combinaison avec les états correspondants des deux premiers signaux A,B, à former n triplets binaire (n > 1) différents des m triplets binaires générés par combinaison.

Ainsi, le procédé de codage prévoit d'imposer un état particulier au signal C pour générer un triplet qui n'est pas généré lors de l'acquisition normale des signaux A, B, C. Selon le procédé de codage, il est possible de coder n informations différentes, n étant compris entre 1 et 7.

Lorsqu'il est nécessaire de coder une information, le procédé prévoit de modifier le signal C de sorte à générer un triplet particulier qui est spécifique à ladite information, de sorte notamment à transmettre cette information à une unité de calcul (ECU).

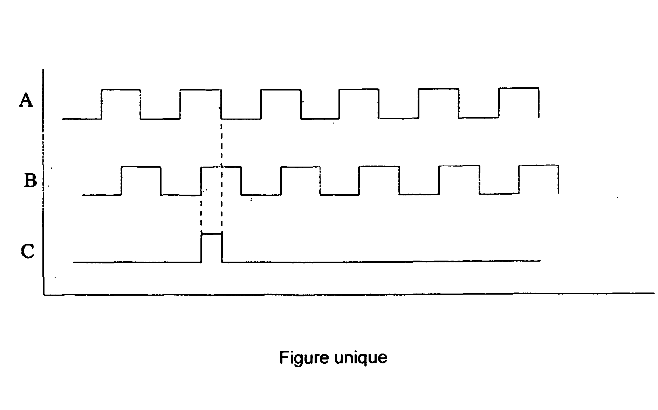

Selon une réalisation, la modification du troisième signal peut être réalisée par modification de la largeur d'au moins une impulsion du troisième signal C. Par exemple, au niveau de l'impulsion représenté sur la figure 1, les triplets normaux sont successivement 100 puis 111 puis 010. Or, si on élargit l'impulsion vers les angles croissants, on peut générer un état 011 entre les états 111 et 010, ou encore remplacer le triplet 010 par le triplet 001.

Ainsi, il est possible de transmettre un triplet 011 ou un triplet 001 qui peut être corrélé à une information codée. En outre, il est possible d'affecter le triplet 011 à une information et le triplet 001 à une autre information, c'est-à-dire de moduler la modification de la largeur en fonction de la nature de l'information à coder.

Selon d'autres réalisations, éventuellement combinable avec la réalisation précédente, la modification du troisième signal peut être réalisée par ;
- déplacement d'au moins une impulsion du troisième signal C ; et/ou
- ajout d'au moins une impulsion dans le troisième signal C.

Selon l'invention, il est donc possible de coder une information sans ajouter au voies supplémentaires aux trois voies nécessaire à la transmission des trois signaux digitaux, et ce sans limitation supplémentaire concernant la fréquence des signaux.

## Revendications

1. Procédé de codage d'au moins une information au moyen de trois signaux digitaux A, B, C délivrés sur respectivement une voie, dans lequel le troisième signal C est délivré par combinaison des deux premiers signaux A, B de sorte à former m triplets binaires, avec m < 8, **caractérisé en ce que** ledit procédé prévoie de modifier le troisième signal C en fonction de l'information à coder de sorte à générer n triplets binaires, avec n > 1, lesdits n triplets étant différents des m triplets.

2. Procédé de codage selon la revendication 1, dans lequel la combinaison des deux premiers signaux A, B est réalisée par l'opération ET, de sorte à délivrer le troisième signal C.

3. Procédé de codage selon la revendication 1 ou 2, dans lequel n informations différentes sont codées respectivement par n triplets différents.

4. Procédé de codage selon l'une quelconque des revendications 1 à 3, dans lequel la modification du troisième signal est réalisée par modification de la largeur d'au moins une impulsion du troisième signal C.

5. Procédé de codage selon l'une quelconque des revendications 1 à 4, dans lequel la modification du troisième signal est réalisée par déplacement d'au moins une impulsion du troisième signal C.

6. Procédé de codage selon l'une quelconque des revendications 1 à 5, dans lequel la modification du troisième signal est réalisée par ajout d'au moins une impulsion dans le troisième signal C.

7. Dispositif de détermination de la position angulaire absolue d'un organe tournant, ledit dispositif comprenant :
- un codeur destiné à être solidarisé à l'organe tournant, ledit codeur étant agencé pour délivrer deux signaux pseudos sinusoïdaux ;
- un capteur destiné à être fixé à distance de lecture du codeur, ledit capteur comprenant des éléments sensibles qui sont aptes à détecter les signaux délivrés par le codeur ;
- un dispositif de traitement des signaux issus du capteur, ledit dispositif étant agencé pour délivrer trois signaux digitaux A, B, C, les signaux A et B étant représentatif de la position angulaire du codeur et le signal C étant obtenu par combinaison des signaux A, B de sorte à comprendre au moins une impulsion de référence, les états respectifs des trois signaux A, B, C formant m triplets binaires, avec m < 8 ;
- une unité centrale connectée au dispositif de traitement, ladite unité étant agencée pour exploiter les signaux A, B, C sur respectivement une voie ;
ledit dispositif de détermination étant **caractérisé en ce que** le dispositif de traitement comprend en outre des moyens de codage pour, en fonction de la réception d'une information à coder, modifier le signal C de sorte à générer un triplet binaire différent des m triplets, et **en ce que** l'unité centrale comprend des moyens de détection dudit triplet.

8. Dispositif de détermination selon la revendication 7, **caractérisé en ce que** le dispositif de traitement est connecté à un dispositif de détection d'un état de fonctionnement, les moyens de codage étant activé par la détection dudit état de sorte à informer l'unité centrale du fonctionnement dans l'état correspondant.

9. Dispositif de détermination selon la revendication 7 ou 8, **caractérisé en ce que** les moyens de codage sont agencés pour coder n informations différentes, par n modifications différentes du signal C de sorte à générer n triplets binaires qui sont différents entre eux.

## Claims

1. Method of coding at least one item of information by means of three digital signals A, B, C, delivered on respectively a channel, in which the third signal C is delivered by a combination of the first two signals A, B so as to form m binary triplets, with m < 8, **characterised in that** said method makes provision for modifying the third signal C according to the information to be coded so as to generate n binary triplets, with n > 1, said n triplets being different from the m triplets.

2. Coding method according to claim 1, in which the first two signals A, B are combined by the AND operation, so as to deliver the third signal C.

3. Coding method according to claim 1 or 2, in which n different items of information are coded respectively by n different triplets.

4. Coding method according to any one of claims 1 to 3, in which the third signal is modified by modifying the width of at least one pulse of the third signal C.

5. Coding method according to any one of claims 1 to 4, in which the third signal is modified by shifting at least one pulse of the third signal C.

6. Coding method according to any one of claims 1 to 5, in which the third signal is modified by adding at least one pulse in the third signal C.

7. Device for determining the absolute angular position of a rotating member, said device comprising:
- a coder intended be secured to the rotating member, said coder being arranged to deliver two pseudo-sinusoidal signals;
- a sensor intended to be fixed at a reading distance from the coder, said sensor comprising sensitive elements that are able to detect the signals delivered by the coder;
- a device for processing the signals issuing from the sensor, said device being arranged to deliver three digital signals A, B, C, the signals A and B representing the angular position of the coder and the signal C being obtained by combining the signals A, B so as to comprise at least one reference pulse, the respective states of the three signals A, B, C forming m binary triplets with m < 8;
- a central unit connected to the processing device, said unit being arranged to use the signals A, B, C on respectively a channel;
said determination device being **characterised in that** the processing device also comprises coding means for modifying the signal C, according to the reception of an item of information to be coded, so as to generate a binary triplet different from the m triplets, and **in that** the central unit comprises means of detecting said triplet.

8. Determination device according to claim 7, **characterised in that** the processing device is connected to a device for detecting a state of functioning, the coding means being activated by the detection of said state so as to inform the central unit of the functioning in the corresponding state.

9. Determination device according to claim 7 or 8, **characterised in that** the coding means are arranged so as to code n different items of information, by n different modifications of the signal C so as to generate n binary triplets that are different from one another.

## Patentansprüche

1. Verfahren zur Codierung von mindestens einer Information mit Hilfe von drei digitalen Signalen A, B, C, geliefert auf jeweils einem Weg, wobei das dritte Signal C durch Kombination der zwei ersten Signale A, B geliefert wird, um m Binärtrippel zu bilden, wobei m < 8, **dadurch gekennzeichnet, dass** das Verfahren vorsieht, das dritte Signal C je nach der zu kodierenden Information zu modifizieren, um n Binärtrippel zu erzeugen, wobei n > 1, wobei die n Trippel verschieden von den m Trippeln sind.

2. Verfahren zur Codierung nach Anspruch 1, wobei die Kombination der zwei ersten Signale A, B durch die Operation ET erfolgt, um das dritte Signal C zu liefern.

3. Verfahren zur Codierung nach Anspruch 1 oder 2, wobei n verschiedene Informationen jeweils durch n verschiedene Trippel codiert werden.

4. Verfahren zur Codierung nach einem der Ansprüche 1 bis 3, wobei die Modifikation des dritten Signals durch Modifikation der Breite von mindestens einem Impuls des dritten Signals C erfolgt.

5. Verfahren zur Codierung nach einem der Ansprüche 1 bis 4, wobei die Modifikation des dritten Signals durch Verschiebung von mindestens einem Impuls des dritten Signals C erfolgt.

6. Verfahren zur Codierung nach einem der Ansprüche 1 bis 5, wobei die Modifikation des dritten Signals durch Hinzufügung von mindestens einem Impuls zum dritten Signal C erfolgt.

7. Vorrichtung zur Bestimmung der absoluten Winkelposition eines Drehorgans, wobei die Vorrichtung Folgendes umfasst:
- einen Codierer, der dazu vorgesehen ist, fest mit dem Drehorgan verbunden zu sein, wobei der Codierer angeordnet ist, um zwei pseudo-sinusförmige Signale zu liefern;
- einen Sensor, der dazu vorgesehen ist, in einem Leseabstand vom Codierer befestigt zu werden, wobei der Sensor empfindliche Elemente umfasst, die dazu geeignet sind, die Signale, geliefert vom Codierer, zu erkennen.
- eine Vorrichtung zur Bearbeitung der Signale, die vom Sensor stammen, wobei die Vorrichtung angebracht ist, um drei digitale Signale A, B, C zu liefern, wobei die Signale A und B die Winkelposition des Codierers darstellen und das Signal C durch Kombination der Signale A, B erhalten wird, um mindestens einen Referenzimpuls zu umfassen, wobei die entsprechenden Zustände der drei Signale A, B, C, m Binärtrippel bilden, wobei m < 8.
- eine Zentraleinheit, verbunden mit der Vorrichtung zur Bearbeitung, wobei die Einheit angebracht ist, um die Signale A, B, C auf jeweils einem Weg zu betreiben;
wobei die Vorrichtung zur Bestimmung **dadurch gekennzeichnet ist, dass** die Vorrichtung zur Bearbeitung außerdem Codierungsmittel umfasst, um je nach dem Empfang einer zu codierenden Information das Signal C zu modifizieren, um ein Binärtrippel zu erzeugen, das von den m Trippeln verschieden ist, und dadurch, dass die Zentraleinheit Mittel zum Erkennung des Trippels umfasst.

8. Vorrichtung zur Bestimmung nach Anspruch 7, **dadurch gekennzeichnet, dass** die Vorrichtung zur Bearbeitung mit einer Vorrichtung zur Erkennung eines Funktionszustands verbunden ist, wobei die Codierungsmittel durch den Nachweis des Zustandes aktiviert werden, um die Zentraleinheit von der Funktion im entsprechenden Zustand zu informieren.

9. Vorrichtung zur Bestimmung nach Anspruch 7 oder 8, **dadurch gekennzeichnet, dass** die Codierungsmittel angebracht sind, um n verschiedene Informationen durch n verschiedene Modifikationen des Signals C zu codieren, um n Binärtrippel zu erzeugen, die untereinander verschieden sind.
